# EUROPÄISCHE PATENTSCHRIFT

(11) **EP 3 292 975 B1**
(45) Veröffentlichungstag und Bekanntmachung des Hinweises auf die Patenterteilung: **12.02.2020**
(21) Anmeldenummer: 17189308.4
(22) Anmeldetag: 05.09.2017
(51) Int. Cl.: B29C 45/14

(54) **VERFAHREN ZUM WIEDERHERSTELLEN EINES VERSCHLEISSTEILS**
METHOD FOR RESTORING A WEAR PART
PROCÉDÉ DE RECRÉATION D'UN ÉLÉMENT D'USURE

(30) Priorität: 07.09.2016 DE 102016116783
(43) Veröffentlichungstag der Anmeldung: 14.03.2018
(73) Patentinhaber: Groß, Bernd, 66822 Lebach (DE)
(72) Erfinder: Groß, Bernd, 66822 Lebach (DE)
(74) Vertreter: Patentanwaltskanzlei Vièl & Wieske PartGmbB

(56) Entgegenhaltungen:
- EP-A1- 2 832 538
- EP-A1- 3 045 308
- WO-A1-2015/087720
- DE-A1-102013 107 095
- GB-A- 2 440 915
- US-A1- 2004 104 510
- US-A1- 2011 008 644
- US-A1- 2011 089 792
- "METAL REINFORCED PLASTIC GEAR RACK", IBM TECHNICAL DISCLOSURE BULLETIN, INTERNATIONAL BUSINESS MACHINES CORP. (THORNWOOD), US, Bd. 36, Nr. 2, 1. Februar 1993 (1993-02-01), Seite 179/180, XP000354301, ISSN: 0018-8689

## Beschreibung

Die Erfindung betrifft ein Verfahren zum Wiederherstellen eines Verschleißteils, bestehend aus einem Träger und einer Verschleißschicht.

Verschleißteile finden sich in nahezu allen Bereichen des Maschinenbaus, sei es bei Greifern, Kupplungen oder Werkzeugen. Der Träger eines solchen Verschleißteils kann beispielsweise aus Metall, Kunststoff oder Keramik bestehen. Der Verschleiß ist häufig durch mechanischen Abrieb bedingt.

In der Regel ist bei Verschleißteilen die Verschleißschicht härter als der Träger, um möglichst lange Standzeiten zu erreichen. In der AT 312 952 A wird beispielsweise ein Verschleißteil aus Hartmetall beschrieben, das an mindestens den auf Verschleiß beanspruchten Stellen einen aus Verbindungen des Titans mit Kohlenstoff und Stickstoff bestehenden Überzug aufweist.

Eine andere Alternative sind Sinterverbundwerkstoffe. Die AT 297 353 A beschreibt die Verwendung eines Sinterverbundwerkstoffes bestehend aus Molybdän und/oder Wolfram sowie hochschmelzenden Oxiden für ein Verschleißteil von Strangpreßmatrizen.

Schließlich gibt es auch Verschleißteile aus faserverstärkten Materialien, beispielsweise glasfaserverstärktem Kunststoff.

Die US 2004/0104510 A1 beschreibt ein Verfahren zum Herstellen von Lenkrädern und Haltegriffen für den Einstiegsbereich von Fahrzeugen.

Die US 2011/0089792 A1 beschreibt ein tragbares Computergehäuse.

IBM Technical Disclosure Bulletin Vol. 36 92 February 1993, S. 179-180 beschreibt ein metallverstärktes Kunststoffzahnrad, das zum Zweck der Geräuschreduzierung eingesetzt wird.

Aus der DE 10 2013 107 095 A1 ist eine beschichtetet Lamelle für eine Luftaustrittsdüse bekannt.

Die GB 2440 915 A beschreibt eine im Dunkeln leuchtenden Gegenstand.

Die WO 2015/087720 A1 beschreibt einen Metall-Kunstharz-Kompositkörper.

Die EP 2 832 538 A1 beschreibt ein beschichtetes Metallmaterial, das in elektronischen Geräten Anwendung findet.

Bei vielen Beanspruchungen von Verschleißteilen, insbesondere Greifern und Aufnahmedornen, tritt trotz des Vorliegens gehärteter Verschleißschichten oder faserverstärkter Verschleißteile ein schneller Verschleiß auf, der es erfordert, die verschlissenen Teile auszutauschen, was jeweils eine Produktionsunterbrechung mit sich bringt.

Der vorliegenden Erfindung liegt die Aufgabe zugrunde, ein neues Verfahren zum Wiederherstellen eines Verschleißteils zu schaffen, das bei geringen Kosten lange Standzeiten ermöglicht.

Diese Aufgabe wird erfindungsgemäß durch ein Verfahren zum Wiederherstellen eines Verschleißteils, bestehend aus einem Träger und einer Verschleißschicht, gelöst, das folgende Arbeitsschritte umfaßt:
a) Einbringen des Trägers in ein Spritzgießwerkzeug,
b) Aufbringen einer Verschleißschicht aus Polyurethan auf die aufgeraute Oberfläche des Trägers,
c) Entnehmen des Verschleißteils aus dem Spritzgießwerkzeug, wenn das Polyurethan ausreichend ausgehärtet ist.

Es hat sich im Rahmen der Erfindung überraschend gezeigt, daß auf diese Weise die Verschleißschicht auch wiederholt fest mit dem Träger verbunden werden kann. Mit derartigen Vorrichtungen zum Handling von Werkstücken oder Werkzeugen können wesentlich längere Standzeiten erreicht werden als mit solchen aus gehärtetem Stahl und dies obwohl die Verschleißschicht eine deutlich geringere Härte aufweist als der Träger oder gar eine Verschleißschicht aus gehärtetem Stahl. Zudem kann das Verschleißteil mit diesem Verfahren nahezu unbeschränkt oft wiederhergestellt werden, wenn die Verschleißschicht abgenutzt ist. Die Verschleißschicht kann zudem nachfolgend bearbeitet werden. Es ist möglich, beliebige Konturen in die Verschleißschicht einzubringen, z.B. durch ein Fräsverfahren, ein Schleifverfahren oder dergleichen. Es ist auch erfindungsgemäß vorgesehen, daß die Verschleißschicht in verschiedenen Shorehärten aufgebracht wird. Das Verfahren eignet sich für alle Verschleißteile, insbesondere für Vorrichtungen zum Handling von Werkstücken oder Werkzeugen, beispielsweise Greifer und Aufnahmedorne.

Es liegt im Rahmen der Erfindung, daß der Träger aus Metall, Kunststoff oder aus einem keramischen Werkstoff besteht.

Grundsätzlich kommt jedes Trägermaterial in Frage, auf dem sich eine ausreichend feste Verbindung der Verschleißschicht aus Polyurethan realisieren läßt. Insbesondere bei Trägern aus Metall, wie sie häufig im Maschinenbau verwendet werden, kann die Standzeit um ein Vielfaches verlängert werden.

In diesem Zusammenhang ist vorgesehen, daß der Träger aus gehärtetem oder ungehärtetem Eisenmetall, wie Werkzeugstahl oder rostfreiem Stahl oder aus gehärtetem oder nicht gehärtetem Nichteisenmetall, wie Aluminium oder Messing, besteht.

Die Aufrauhung der Oberfläche des Verschleißteils kann beispielsweise durch Schruppen oder vergleichbare spanabhebende Verfahren oder aber durch Rändelung oder ähnliche Verfahren erreicht werden (z.B. durch das Einbringen von kleinen Sacklochbohrungen, Nuten, Kreuzmustern, etc.).

Es liegt im Rahmen der Erfindung, daß zusätzlich zu der Aufrauhung noch Vertiefungen in die mit der Verschleißschicht zu versehenden Oberfläche des Trägers eingebracht werden.

Dies kann beispielsweise mittels eines Prismenfräsers erfolgen. Die Vertiefungen erzielen den Effekt, daß einer Ablösung der Verschleißschicht noch besser entgegengewirkt wird.

Es ist bevorzugt, daß die Verschleißschicht aus Polyurethan eine Schichtdicke von 1 bis 10 mm, vorzugsweise von 3 bis 8 mm, besonders bevorzugt von 4 bis 6 mm aufweist.

Die Dicke der Polyurethanschicht muß den jeweiligen Verschleißanforderungen angepaßt werden.

Es liegt im Rahmen der Erfindung, daß das Polyurethan ausgewählt ist aus der Gruppe bestehend aus Polyurethan-Elastomeren auf Polyesterbasis, insbesondere PUR D44, und Polyester-Urethan-Kautschuk (AU).

Es ist vorteilhaft, wenn nach Schritt a) die aufgeraute Oberfläche entfettet und/oder gesäubert wird.

Es sollen keine Rückstände an der Fläche anhaften, die die Verbindung zwischen der Oberfläche und der Polyurethanschicht beeinträchtigen. Dies kann mit einem gängigen Fettlöser, wie z.B. Aceton, oder durch feines Sandstrahlen oder ähnliche Verfahren erfolgen. Durch diese Maßnahmen wird die Haftung des Polyurethans an dem Träger verbessert.

Nachfolgend werden Ausführungsbeispiele der Erfindung anhand von Zeichnungen näher erläutert.

Es zeigen
- Fig. 1a und Fig. 1b: einen Greifer in perspektivischer Darstellung und in Seitenansicht,
- Fig. 2a und Fig. 2b: einen Andrückteller in perspektivischer Darstellung und in Seitenansicht.

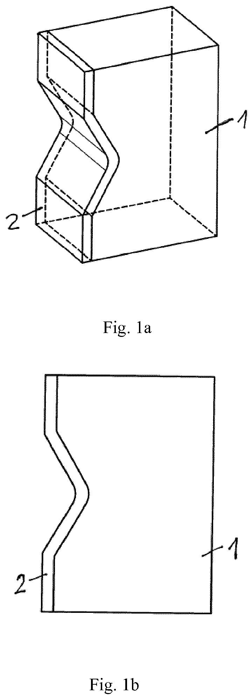

Wie aus den Fig. 1a und 1b ersichtlich, besteht der Greifer aus einem Träger 1 aus Werkzeugstahl, auf den eine 3 mm dicke Verschleißschicht 2 aus PUR D44 (Shorehärte: 90) aufgebracht ist.

Dies erfolgt in folgenden Schritten:
In einem ersten Schritt wird die mit der Verschleißschicht 2 zu versehende Oberfläche des Trägers 1 durch Schruppen aufgeraut. Hierdurch entsteht eine raue Oberfläche, auf der das Polyurethan gut haftet. Dieser Schritt kann unter Umständen entfallen, beispielsweise wenn die Verschleißschicht rein auf Druck belastet wird.

In einem zweiten Schritt wird die mit der Verschleißschicht 2 zu versehende Oberfläche des Trägers 1 entfettet, beispielsweise durch Abreiben mit Aceton, Sandstrahlen oder dergleichen.

In einem dritten Schritt wird der Träger in ein Spritzgießwerkzeug eingebracht, dessen Innenvolumen demjenigen des fertigen Verschleißteils (nach Aufbringen der Verschleißschicht 2) entspricht.

In einem vierten Schritt wird eine Verschleißschicht 2 aus Polyurethan D44 auf die aufgeraute Oberfläche des Trägers 1 aufgebracht.

In dem fünften und letzten Schritt wird das fertige Verschleißteils aus dem Spritzgießwerkzeug entnommen, wenn das Polyurethan ausreichend ausgehärtet ist.

Die Verschleißschicht 2 kann nachfolgend bearbeitet werden. Es ist möglich, beliebige Konturen in die Verschleißschicht 2 einzubringen, z.B. durch ein Fräsverfahren. Beispielsweise können Nuten in sie eingebracht werden.

Es hat sich gezeigt, daß die Standzeit des so hergestellten Verschleißteils gegenüber herkömmlichen Verschleißteilen um den Faktor 8 bis 10 erhöht ist (mehr als zwei Jahre gegenüber 3 Monaten). Zudem kann das Verfahren sehr oft wiederholt werden, so daß der Träger 1 jahrelang wiederverwendet werden kann.

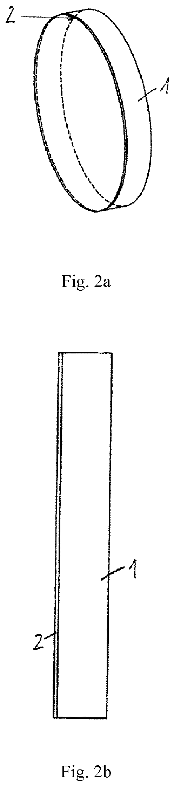

Der Andrückteller, der in den Fig. 2a und 2b dargestellt ist, besteht ebenfalls aus einem Träger 1 aus Werkzeugstahl, auf den eine 4 mm dicke Verschleißschicht 2 aus massivem Polyester-Urethan-Kautschuk (Vulkollan, Fa. Bayer AG) aufgebracht ist.

Das Aufbringverfahren ist das gleiche wie bei dem in Fig. 1 dargestellten Greifer.

Auch der Andrückteller hat eine um das 8 bis 10-fache verlängerte Standzeit verglichen mit herkömmlichen Andrücktellern.

Der Träger 1 kann über das erfindungsgemäße Verfahren ebenfalls nahezu beliebig oft mit einer neuen Verschleiß schicht 2 versehen werden.

Selbstverständlich kann auch hier die Verschleißschicht 2 mit Konturen versehen werden.

## Patentansprüche

1. Verfahren zum Wiederherstellen eines Verschleißteils, bestehend aus einem Träger (1) und einer Verschleißschicht (2), **das folgende Schritte umfaßt:**
a) Einbringen des Trägers (1) in ein Spritzgießwerkzeug,
b) Aufbringen einer Verschleißschicht (2) aus Polyurethan auf die aufgeraute Oberfläche des Trägers (1),
c) Entnehmen des Verschleißteils aus dem Spritzgießwerkzeug, wenn das Polyurethan ausreichend ausgehärtet ist.

2. Verfahren gemäß Anspruch 1, **dadurch gekennzeichnet, daß** der Träger (1) aus Metall, Kunststoff oder aus einem keramischen Werkstoff besteht.

3. Verfahren gemäß Anspruch 2, **dadurch gekennzeichnet, daß** der Träger (1) aus gehärtetem oder ungehärtetem Eisenmetall, wie Werkzeugstahl oder rostfreiem Stahl oder aus gehärtetem oder nicht gehärtetem Nichteisenmetall, wie Aluminium oder Messing, besteht.

4. Verfahren gemäß einem der Ansprüche 1 bis 3, **dadurch gekennzeichnet, daß** die Aufrauhung der Oberfläche des Verschleißteils durch Schruppen erfolgt.

5. Verfahren gemäß einem der Ansprüche 1 bis 4, **dadurch gekennzeichnet, daß** zusätzlich zu der Aufrauhung noch Vertiefungen in die mit der Verschleißschicht (2) zu versehenden Oberfläche des Trägers (1) eingebracht werden.

6. Verfahren gemäß einem der Ansprüche 1 bis 5, **dadurch gekennzeichnet, daß** die Verschleißschicht (2) aus Polyurethan eine Schichtdicke von 1 bis 10 mm, vorzugsweise von 2 bis 8 mm, besonders bevorzugt von 3 bis 6 mm aufweist.

7. Verfahren gemäß einem der Ansprüche 1 bis 6, **dadurch gekennzeichnet, daß** das Polyurethan ausgewählt ist aus der Gruppe bestehend aus Polyurethan-Elastomeren auf Polyesterbasis, insbesondere PUR D44, und Polyester-Urethan-Kautschuk (AU).

8. Verfahren gemäß einem der Ansprüche 1 bis 7, **dadurch gekennzeichnet, daß** nach Schritt a) die aufgeraute Oberfläche entfettet wird.

## Claims

1. Method for restoring a wear part consisting of a carrier (1) and a wear layer (2), **comprising the following steps**:
a) introduction of the carrier (1) into an injection mould,
b) application of a wear layer (2) of polyurethane to the roughened surface of the carrier (1),
c) removal of the wear part from the injection mould when the polyurethane is sufficiently cured.

2. Method according to claim 1, **characterised in that** the carrier (1) consists of metal, plastic or a ceramic material.

3. Method according to claim 2, **characterised in that** the carrier (1) consists of hardened or unhardened ferrous metal, such as tool steel or stainless steel, or of hardened or unhardened non-ferrous metal, such as aluminium or brass.

4. Method according to any one of claims 1 to 3, **characterised in that** the roughening of the surface of the wear part is carried out by rough machining.

5. Method according to any one of claims 1 to 4, **characterised in that** in addition to the roughening, depressions are also introduced into the surface of the carrier (1) to be provided with the wear layer (2).

6. Method according to any one of claims 1 to 5, **characterised in that** the wear layer (2) of polyurethane has a layer thickness of 1 to 10 mm, preferably of 2 to 8 mm, particularly preferably of 3 to 6 mm.

7. Method according to any one of claims 1 to 6, **characterised in that** the polyurethane is selected from the group consisting of polyurethane elastomers on a polyester basis, in particular PUR D44, and polyester-urethane rubber (AU).

8. Method according to any one of claims 1 to 7, **characterised in that** after step a) the roughened surface is degreased.

## Revendications

1. Procédé de restauration d'une pièce d'usure constituée d'un support (1) et d'une couche d'usure (2), **comprenant les étapes suivantes consistant à**
a) introduire le support (1) dans un moule pour injection,
b) appliquer une couche d'usure (2) en polyuréthane sur la surface dégrossie du support (1),
c) retirer la pièce d'usure du moule pour injection lorsque le polyuréthane a suffisamment durci.

2. Procédé selon la revendication 1, **caractérisé en ce que** le support (1) est composé de métal, de matière plastique ou d'un matériau céramique.

3. Procédé selon la revendication 2, **caractérisé en ce que** le support (1) est composé de métal ferreux trempé ou non trempé, tel que de l'acier à outils ou de l'acier inoxydable, ou de métal non ferreux trempé ou non trempé, tel que de l'aluminium ou du laiton.

4. Procédé selon l'une quelconque des revendications 1 à 3, **caractérisé en ce que** le dégrossissage de la surface de la pièce d'usure est réalisé par dégrossissage au tour.

5. Procédé selon l'une des revendications 1 à 4, **caractérisé en ce que,** en plus du dégrossissage, des creux sont réalisés dans la surface du support (1) à pourvoir de la couche d'usure (2).

6. Procédé selon l'une des revendications 1 à 5, **caractérisé en ce que** la couche d'usure (2) en polyuréthane présente une épaisseur de couche de 1 à 10 mm, de préférence de 2 à 8 mm, de façon privilégiée de 3 à 6 mm.

7. Procédé selon l'une quelconque des revendications 1 à 6, **caractérisé en ce que** le polyuréthane est choisi dans le groupe constitué par les élastomères de polyuréthane à base de polyester, en particulier le PUR D44, et le caoutchouc polyester-uréthane (AU).

8. Procédé selon l'une des revendications 1 à 7, **caractérisé en ce que** la surface dégrossie est dégraissée après l'étape a).
